# EUROPÄISCHE PATENTSCHRIFT

(11) **EP 1 702 514 B1**
(45) Veröffentlichungstag und Bekanntmachung des Hinweises auf die Patenterteilung: **17.09.2008**
(21) Anmeldenummer: 05026659.2
(22) Anmeldetag: 07.12.2005
(51) Int. Cl.: A22B 5/00, A22C 17/02

(54) **Werkzeugeinrichtung zum Abtrennen von Teilen von Schlachttieren**
Tool arrangement for severing parts of slaughtered animals
Arrangement d'outil pour séparer des parties d'animaux abattus

(30) Priorität: 15.03.2005 DE 202005004098 U
(43) Veröffentlichungstag der Anmeldung: 20.09.2006
(73) Patentinhaber: SCHMID & WEZEL GmbH & Co., 75429 Maulbronn (DE)
(72) Erfinder: Lay, Norbert, 71149 Bondorf (DE)
(74) Vertreter: Dreiss, Fuhlendorf, Steimle & Becker

(56) Entgegenhaltungen:
- GB-A- 1 377 419
- GB-A- 2 228 858
- US-A- 4 653 147
- US-A- 5 180 329
- US-A1- 2004 116 061

## Beschreibung

Die Erfindung betrifft eine Werkzeugeinrichtung zum Abtrennen von Teilen von Schlachttieren, zum Beispiel der Klauen von geschlachteten Schweinen.

Heute erfolgt der genannte Vorgang derart, dass mit den pneumatisch oder hydraulisch betriebenen Zangen, die von einer Bedienungsperson manuell geführt werden, jeweils die Klauen abgetrennt werden. Jeder Abtrennvorgang muss separat erfolgen. In kaltfeuchter Umgebung ist diese Arbeit körperlich anstrengend. Durch die extreme Monotonie kommt es immer wieder zu Bedienungsfehlern und Unfällen.

Auch sind automatisierte Vorgänge aus dem Stand der Technik bekannt. Im Hinblick darauf offenbart das Dokument GB 2228858 eine Vorrichtung zum Abtrennen der Füßen eines Schlachttieres, die zwei parallel zweinander angeordenete Schneidzangen aufweist.

Der Erfindung liegt die Aufgabe zugrunde, diesen Abtrennvorgang zu vereinfachen beziehungsweise zu automatisieren.

Die Lösung dieser Aufgabe erfolgt dadurch, dass die Werkzeugeinrichtung als ein von einem Roboter führbares Werkzeug ausgebildet und mittels einer Roboteranschlussplatte an einen Roboter anschließbar ist, und die Roboteranschlussplatte Teil einer im Wesentlichen U-förmigen Trägereinrichtung ist und einen Schenkel derselben bildet, wobei der andere Schenkel durch zwei parallel zueinander angeordnete Zangen gebildet wird, und bei der ferner parallel zu den Zangen eine Führungsplatte vorgesehen ist, die Schneidbereiche und auf diese schräg zulaufende Einführungskanten aufweist.

Vorteilhaft Weiterbildungen der Erfindung sind in den Unteransprüchen definiert.

Erfindungsgemäß wird also ein durch ein Roboter einfach führbares Werkzeug geschaffen. Die parallele Anordnung der Zangen ermöglicht eine erhebliche Verfahrensvereinfachung und Reduzierung der Prozesszeiten.

Ein Ausführungsbeispiel der Erfindung mit ihren vorteilhaften Weiterbildungen wird im Folgenden unter Bezugnahme auf die beigefügten Zeichnungen näher beschrieben. Es stellen dar:
- Figur 1: ein Ausführungsbeispiel;
- Figur 2: einen Schnitt entlang der Linie II-II in Figur 1;
- Figur 3: einen Schnitt entlang der Linie III-III in Figur 1;
- Figur 4: eine Zange 2 in perspektivischer Darstellung;
- Figur 5: eine Seitenansicht der Zange 2;
- Figur 6: einen Schnitt entlang der Linie VI-VI in Figur 5.

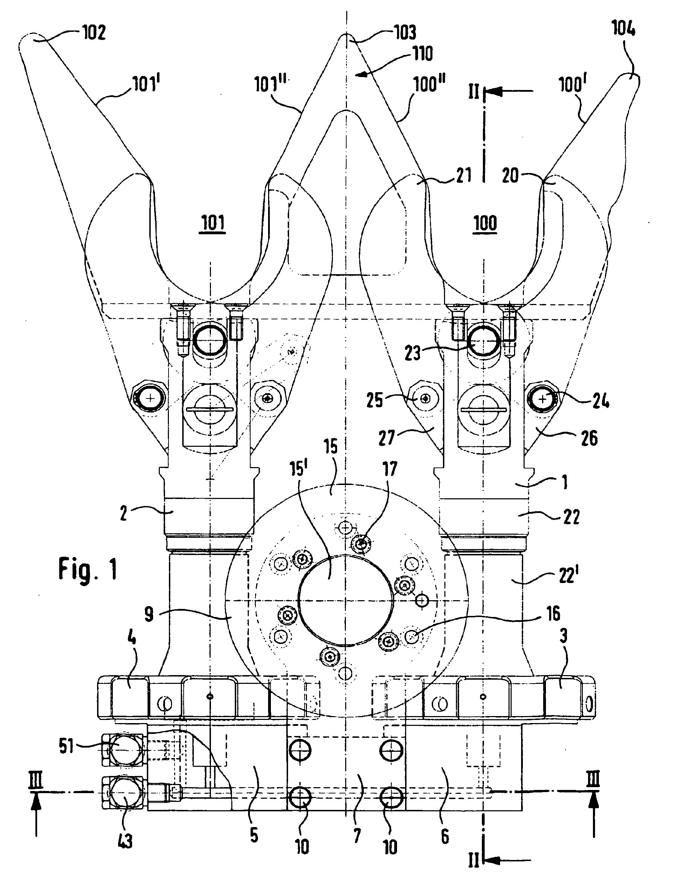

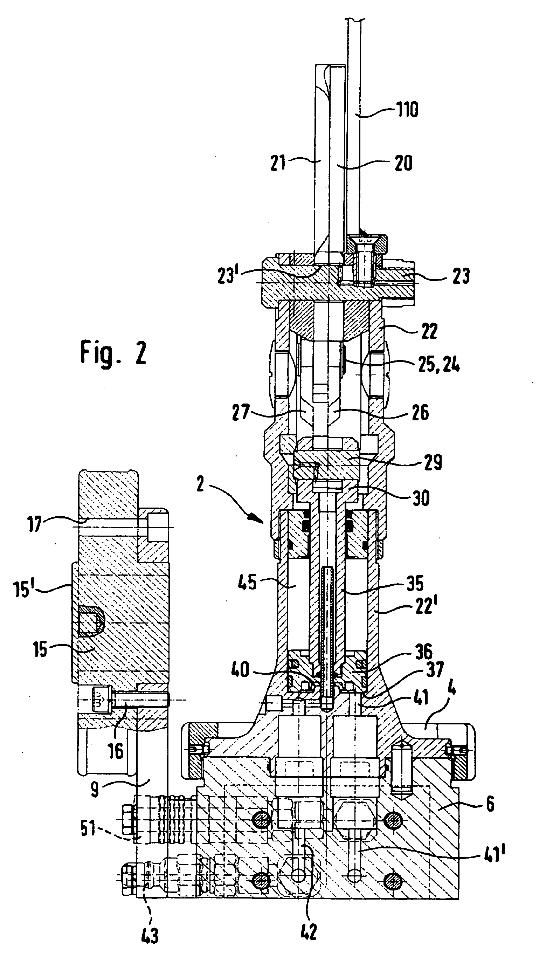

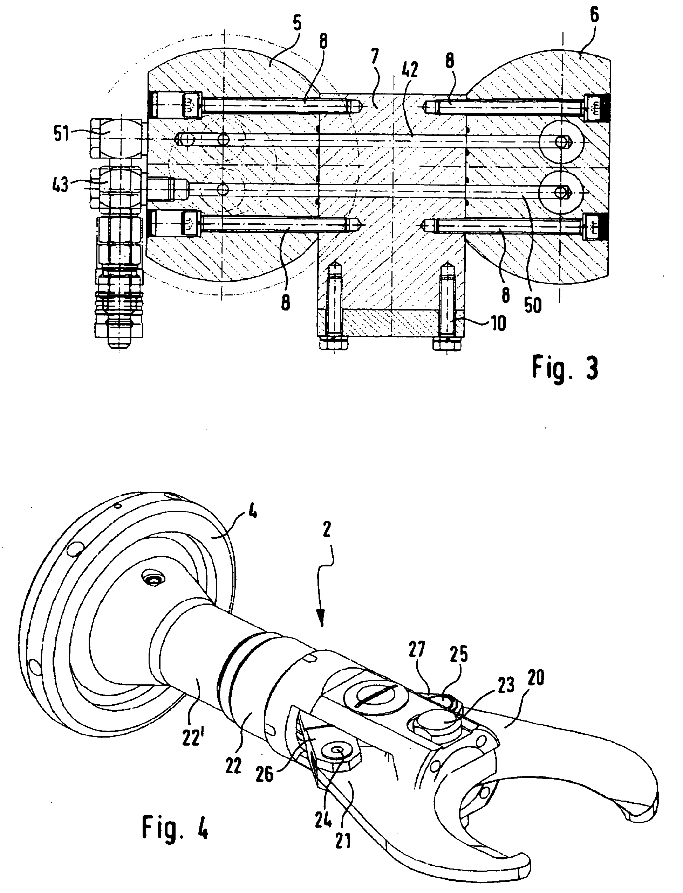

Wie aus Figur 1 ersichtlich, sind zwei Zangen 1 und 2 jeweils mittels einer Überwurfmutter 3 beziehungsweise 4 an einer Stützplatte 5 beziehungsweise 6 lösbar befestigt. Die Stützplatten 5 und 6 sind beidseitig an einer Basisplatte 7 angeordnet und mit dieser mittels Schrauben 8 verschraubt (vergleiche Figur 3). Die Basisplatte 7 ist an einer Trägerplatte 9 mittels Schrauben 10 ebenfalls lösbar rechtwinklig befestigt. Die Trägerplatte 9 (vergleiche auch Figur 2) ist ihrerseits mittels Schrauben 16 mit einer Roboteranschlussplatte 15 verschraubt. Diese weist mehrere Stufenbohrungen 17 auf, mit denen sie an die Anschlussfläche eines Roboters (nicht gezeigt) angeschraubt werden kann. Es entsteht also ein im Prinzip U-förmiger Aufbau, wobei der eine Schenkel durch die Trägerplatte 9 und die Roboteranschlussplatte 15, der andere Schenkel durch die beiden Zangen 1 und 2 und die Basis durch die Basisplatte 7 gebildet wird. Damit ist das Werkzeug vom Roboter einfach von unten nach oben zu führen, wie bei dem oben genannten Abtrennvorgang zweckmäßig.

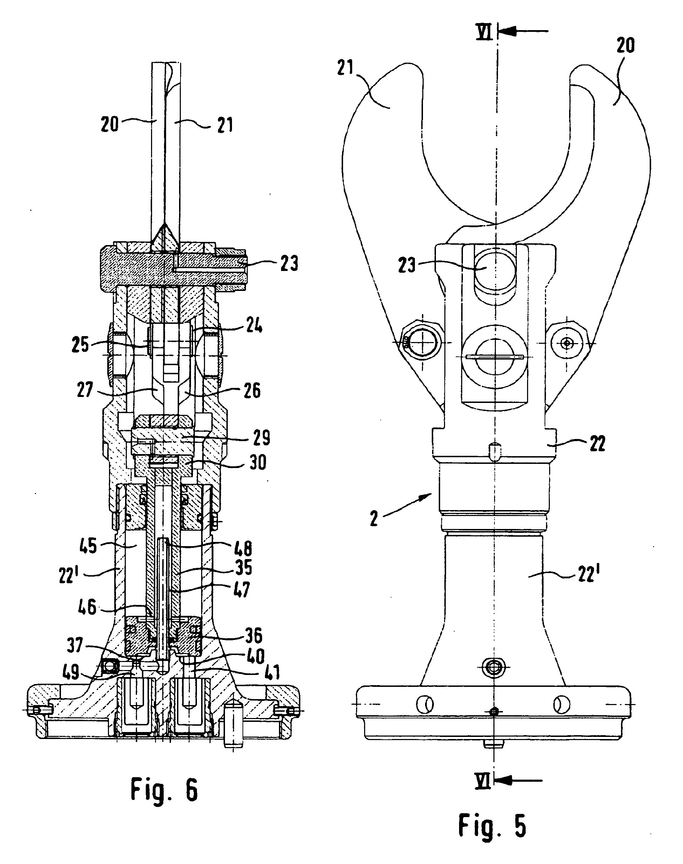

Die Zange 2 ist als Einheit in Figur 4 gezeigt. Zange 1 ist identisch. Die Zange 2 weist zwei Klingen 20, 21 auf, die um einen im Gehäuse 22 angeordneten Bolzen 23 aus der in Figur 4 gezeigten Lage so schwenkbar sind, dass sie sich schließen und damit die Hufe oder Klauen von Schlachttieren abtrennen können. Die Klingen 20 und 21 sind, wie aus Figur 1 und 2 zu ersehen, jeweils mit in ihrem Mittelbereich mit entsprechenden Bohrungen 23' versehen, mit denen sie auf dem Bolzen 23 gelagert sind. Die unteren Enden der beiden Klingen 20, 21 sind mittels Bolzen 24, 25 mit Pleueln 26, 27 drehbar verbunden (vergleiche Figur 4, 6). Diese Pleuel sind mit ihren unteren Enden auf einem Bolzen 29 gelagert, der das obere gabelförmige Ende 30 einer Kolbenstange 35 durchsetzt. Die Aufwärtsbewegung der Kolbenstange 35 führt also zu einem Schließen der beiden Klingen 20, 21; die Abwärtsbewegung der Kolbenstange 35 führt wieder zum Öffnen in die in den Figuren 1 und 2 gezeigte Stellung.

Die Kolbenstange 35 ist an ihrem unteren Ende mit einem Kolben 36 verschraubt (vergleiche Figur 6). In der untersten Stellung, die in Figur 6 gezeigt ist, sitzt der Kolben 36 in einer Ausnehmung 37 des mit dem Gehäuse 22 verschraubten unteren Gehäuseteils 22'. Die Unterseite des Kolbens 36 und die Ausnehmung 37 im Gehäuseteil 22' bilden zwischen sich einen Druckraum 40. Diesem Druckraum 40 kann Hydrauliköl über die Leitung 41, die Leitung 42 (vergleiche Figur 3) und das Anschlussstück 51 zugeführt werden. Dann bewegt sich der Kolben 36 nach oben.

Befindet sich der Kolben 36 in seiner obersten Stellung, dann kann der Druckraum 45 mit Hydrauliköl beaufschlagt werden, so dass sich der Kolben 36 wieder abwärts bewegt. Die Verbindung des Druckraums 45 mit einem Anschlussstück 43 erfolgt über Bohrungen 46 in der Kolbenstange 35, den Ringraum 47, das obere offene Ende des Rohrstücks 48, die Leitung 49 und die Leitung 50 (vergleiche Figur 3).

Wenn Schlachttiere, zum Beispiel Schweine, an den Hinterbeinen aufgehängt sind, dann erstrecken sich die Vorderbeine jeweils unter einem Winkel von cirka 45° von oben nach unten. Man kann also mit Hilfe der Doppelanordnung zweier Zangen, nämlich der Zangen 1 und 2 beide Vorderbeine gleichzeitig abtrennen.

Die Einführung der Vorderbeine in die Schneidbereiche 100, 101 zwischen den Klingen 20, 21 der Zangen 1 beziehungsweise 2 erfolgt durch eine mit drei Spitzen 102, 103, 104 versehene, also als "Dreizack" ausgebildete Führungsplatte 110, in der die Schneidbereiche 100, 101 als Ausnehmungen vorgesehen sind. Die Dimensionen sind so gewählt, dass die Abstände der beiden Vorderbeine eines Schlachttieres dem Abstand der Schneidräume 100, 101 voneinander entsprechen. Die gesamte Anordnung, wie sie in Figur 1 und 2 zu ersehen ist, wird dann von einem Roboter von unten nach oben bewegt. Die Vorderbeine des Schlachttieres werden durch die auf die Schneidbereiche 100, 101 konvergierend zulaufenden Seitenkanten 100', 102' beziehungsweise 101', 101 " in die Schneidbereiche 100, 100 " eingeführt.

## Patentansprüche

1. Werkzeugeinrichtung zum Abtrennen von Teilen von Schlachttieren, **dadurch gekennzeichnet, dass** sie als ein von einem Roboter führbares Werkzeug ausgebildet und mittels einer Roboteranschlussplatte (15) an einen Roboter anschließbar ist, und die Roboteranschlussplatte (15) Teil einer im Wesentlichen U-förmigen Trägereinrichtung (9) ist und einen Schenkel derselben bildet, wobei der andere Schenkel durch zwei parallel zueinander angeordnete Zangen (1, 2) gebildet wird, und bei der ferner parallel zu den Zangen (1, 2) eine Führungsplatte (110) vorgesehen ist, die Schneidbereiche (100, 101) und auf diese schräg zulaufende Einführungskanten (100', 100'', 101', 101'') aufweist.

2. Werkzeugeinrichtung nach Anspruch 1, **dadurch gekennzeichnet, dass** die Zangen (1, 2) auf Stützplatten (5, 6) lösbar angeordnet sind, und dass die Betätigung der Zangen (1, 2) durch je einen Kolben (36) einer Kolben/Zylinder-Anordnung (30, 35, 36, 37, 40, 45, 47, 48) erfolgt, dem ein unter Druck stehendes Fluid über an oder in der Werkzeugeinrichtung vorgesehene Anschlüsse (43, 51) zugeführt wird.

## Claims

1. Tool apparatus for severing parts of slaughtered animals, **characterised in that** it is designed in the form of a tool guidable by a robot and can be connected to a robot by means of a robot connection plate (15), and that the robot connection plate (15) is part of a substantially U-shaped carrier device (9) and forms one leg thereof, the other leg being formed by two tongs (1, 2) arranged parallel to one another, and in which a guide plate (110) is provided, also parallel to the tongs (1, 2), which possesses cutting areas (100, 101) and guide edges (100', 100'', 101', 102'') running diagonally towards these.

2. Tool apparatus according to claim 1, **characterised in that** the tongs (1, 2) are arranged detachably on supporting plates (5, 6), and that each of the tongs (1, 2) is actuated by a piston (36) of a piston/cylinder arrangement (30, 35, 36, 37, 40, 45, 47, 48) to which a pressurised fluid is fed via connections (43, 51) provided on or in the tool apparatus.

## Revendications

1. Dispositif d'outillage pour la séparation de quartier d'animaux d'abattage, **caractérisé en ce qu'**il est réalisé comme un outil pouvant être guidé par un robot et pouvant être connecté à un robot au moyen d'une plaque de connexion de robot (15) et **en ce que** la plaque de connexion de robot (15) fait partie d'un dispositif de support (9) substantiellement en forme de U et constitue une branche de celui-ci, l'autre branche étant constituée par deux pinces (1, 2) disposées en parallèle l'une à l'autre, et dans laquelle en outre une plaque de guidage (110) est prévue en parallèle aux pinces (1, 2) et présente des zones de coupe (100, 101) et des arêtes d'introduction (100', 100'', 101', 101'') arrivant en oblique jusqu'à celles-ci.

2. Dispositif d'outillage selon la revendication 1, **caractérisé en ce que** les pinces (1, 2) sont disposées de façon amovible sur des plaques de soutien (5, 6), et **en ce que** l'actionnement des pinces (1, 2) s'effectue par respectivement un piston (36) d'un ensemble piston/cylindre (30, 35, 36, 37, 40, 45, 47, 48) auquel un fluide pressurisé est amené par l'intermédiaire de raccords (43, 51) prévus sur ou dans le dispositif d'outillage.
